# EUROPÄISCHE PATENTANMELDUNG

(11) **EP 1 074 336 A2**
(43) Veröffentlichungstag der Anmeldung: **07.02.2001**
(21) Anmeldenummer: 00116585.1
(22) Anmeldetag: 01.08.2000
(51) Int. Cl.: B23Q 3/155

(54) **Drehmaschine und Verfahren zum Wechseln von Werkzeugen einer solchen Drehmaschine**

(30) Priorität: 06.08.1999 DE 19937238
(71) Anmelder: Heyligenstaedt GmbH & Co. KG i.K., 35392 Giessen (DE)
(72) Erfinder: Rolshausen, Günter, 35444 Biebertal (DE); Seidel, Martin, 35394 Giessen (DE); Berghäuser, Horst, 35606 Solms (DE); Böth, Heinrich, 35102 Lohra (DE)
(74) Vertreter: Schlagwein, Udo, Dipl.-Ing.

(57) **Zusammenfassung**

Eine Drehmaschine (1) ist mit einem ortsfest angeordneten Werkzeugmagazin (12) sowie einem parallel zu ihrem Maschinenbett (2) verfahrbaren Zwischenmagazin (6) mit Werkzeugaufnahmen ausgestattet. Zum Transport von Werkzeugen (13) von dem ortsfesten Werkzeugmagazin (12) zum Zwischenmagazin (6) dient eine parallel zu dem Maschinenbett (2) verfahrbare Längstransporteinheit (9). Die Werkzeugaufnahmen des Zwischenmagazins (6) sind auf einem um eine in Längsrichtung des Maschinenbettes (2) verlaufende Achse drehbar angeordneten Werkzeughalter angeordnet und zum unmittelbaren Wechsel von Werkzeugen (13) zwischen dem Zwischenmagazin (6) und dem Werkzeugträger (5) bzw. der Längstransporteinheit (9) unabhängig voneinander in Längsrichtung des Maschinenbettes (2) verfahrbar.

## Beschreibung

Die Erfindung betrifft eine Drehmaschine mit einem Maschinenbett, auf welchem ein Bettschlitten mit einem Werkzeugträger verfahrbar angeordnet ist und die ein ortsfest angeordnetes Werkzeugmagazin sowie ein parallel zu dem Maschinenbett verfahrbares Zwischenmagazin mit mehreren Werkzeugaufnahmen aufweist. Weiterhin betrifft die Erfindung ein Verfahren zum Wechseln von Werkzeugen einer solchen Drehmaschine.

Eine Drehmaschine der vorstehenden Art ist beispielsweise Gegenstand der DE 20 12 403 A1. Bei der in dieser Schrift erläuterten Drehmaschine ist ein Werkzeugwechsler vorgesehen, welcher die Werkzeuge zwischen dem ortsfesten Werkzeugmagazin und dem Zwischenmagazin wechselt. Ein weiterer Werkzeugwechsler ist auf dem Bettschlitten angeordnet und dient dazu, die Werkzeuge zwischen dem Zwischenmagazin und dem Werkzeugträger zu wechseln. Zum Wechseln von Werkzeugen zwischen dem ortsfesten Werkzeugmagazin und dem Zwischenmagazin muss der Bettschlitten mit dem Zwischenmagazin in eine Übergabestellung an einer Stirnseite des Maschinenbettes fahren, so dass für diesen Wechsel relativ viel Zeit erforderlich ist.

Zur Verkürzung der Werkzeugwechselzeiten beschreibt die DE 16 02 810 A2 eine Drehmaschine, bei der auf separaten Führungsbahnen parallel zum Maschinenbett ein relativ großes Werkzeugmagazin längsverfahrbar angeordnet ist. Auf dem Werkzeugschlitten der Drehmaschine ist ein Werkzeugwechsler angeordnet, welcher Werkzeuge zwischen dem Werkzeugmagazin und dem Werkzeugträger zu wechseln vermag. Durch diese Gestaltung wird es möglich, noch während des Arbeitens der Drehmaschine das Werkzeugmagazin in eine solche Position zu bringen, dass sich das jeweils gewünschte Werkzeug des Werkzeugmagazins in unmittelbarer Nähe zum Werkzeugträger befindet, so dass Nebenzeiten für das Verfahren des Werkzeugmagazins vermieden werden. Die in dieser Schrift erläuterte Drehmaschine hat jedoch nur ein einziges Werkzeugmagazin, so dass die Zahl der möglichen Werkzeuge begrenzt ist, weil das Werkzeugmagazin aus Platzgründen nicht sehr groß ausgebildet werden kann und mit zunehmender Größe die Zeiten für das Beschleunigen und Abbremsen des Werkzeugmagazins ansteigen, so dass das Verfahren des Werkzeugmagazins nicht mehr immer rasch genug erfolgen kann.

Der Erfindung liegt das Problem zugrunde, eine Drehmaschine der eingangs genannten Art so auszubilden, dass alle erforderlichen Werkzeugwechselvorgänge möglichst rasch erfolgen können und die gegenseitige Beeinflussung auf ein Minimum reduziert wir. Weiterhin soll ein Verfahren zum Wechseln von Werkzeugen bei einer erfindungsgemäßen Drehmaschine aufgezeigt werden.

Das erstgenannte Problem wird erfindungsgemäß dadurch gelöst, dass zum Transport von Werkzeugen von dem ortsfesten Werkzeugmagazin zum Zwischenmagazin eine parallel zu dem Maschinenbett verfahrbare Längstransporteinheit angeordnet ist und dass die Werkzeugaufnahmen des Zwischenmagazins auf einem um eine in Längsrichtung des Maschinenbettes verlaufenden Achse drehbar angeordneten Werkzeughalter angeordnet und zum unmittelbaren Wechsel von Werkzeugen zwischen dem Werkzeugträger und dem Zwischenmagazin sowie der Längstransporteinheit und dem Zwischenmagazin unabhängig voneinander in Längsrichtung des Maschinenbettes verfahrbar sind.

Durch die erfindungsgemäße Längstransporteinheit wird es möglich, dass die in das Zwischenmagazin einzuwechselnden Werkzeuge bereits während des Arbeitens der Drehmaschine zum Zwischenmagazin transportiert werden. Da die Werkzeugaufnahmen des Zwischenmagazins unabhängig voneinander verfahren werden können, ist der Werkzeugwechsel zwischen dem Werkzeugträger der Drehmaschine und dem Zwischenmagazin vom Werkzeugwechsel zwischen der Längstransporteinheit und dem Zwischenmagazin unabhängig. Deshalb kann letzterer zu beliebigen Zeiten ohne Rücksicht darauf erfolgen, dass gleichzeitig ein Werkzeugwechsel beim Werkzeugträger erfolgt. Da die Werkzeugaufnahmen zum unmittelbaren Wechsel von Werkzeugen zwischen dem Werkzeugträger und dem Zwischenmagazin ausgebildet sind, benötigt man bei der erfindungsgemäßen Drehmaschine keinen Werkzeugwechsler, welcher für jeden Wechselvorgang eine zeitaufwendige Schwenkbewegung um 180° ausführen muss. Bei der erfindungsgemäßen Drehmaschine ist das Zwischenmagazin zugleich Werkzeugwechsler.

Konstruktiv besonders einfach ist das Zwischenmagazin gestaltet, wenn gemäß einer Weiterbildung der Erfindung jede Werkzeugaufnahme des Zwischenmagazins an einem radial ausgerichteten Träger eines in Längsrichtung des Maschinenbettes verfahrbaren Schieber des Zwischenmagazins angeordnet ist.

Das Zwischenmagazin benötigt keine eigenen Führungsbahnen und keinen eigenen Antrieb, wenn gemäß einer anderen Weiterbildung der Erfindung das Zwischenmagazin auf Führungsbahnen verfahrbar ist, welche zugleich zum Verfahren des Bettschlittens dienen und wenn das Zwischenmagazin unmittelbar mit dem Bettschlitten verbunden ist.

Auch zum Wechsel von Werkzeugen zwischen dem ortsfesten Werkzeugmagazin und der Längstransporteinheit benötigt man keinen separaten Werkzeugwechsler, wenn die Längstransporteinheit einen höhenverfahrbaren Schieber und daran zwei unabhängig voneinander quer verfahrbare Werkzeugaufnahmen hat.

Das ortsfeste Werkzeugmagazin ist hinsichtlich der bei den Anwendern verfügbaren Hallenverkehrsflächen zur Werkzeuganlieferung sowie bezüglich der Gehwege für das Maschinenbedienpersonal und des Beobachtungsbereiches optimal angeordnet, wenn gemäß einer anderen Weiterbildung der Erfindung das ortsfeste Werkzeugmagazin an der von der Bedienseite der Drehmaschine aus gesehen linken Stirnseite des Maschinenbettes angeordnet ist und in Längsrichtung des Maschinenbettes ausgerichtete Werkzeugspeicherplätze aufweist.

Das zweitgenannte Problem, nämlich die Schaffung eines Verfahrens zum Wechseln von Werkzeugen einer Drehmaschine, welche ein ortsfest angeordnetes Werkzeugmagazin sowie ein parallel zu dem Maschinenbett verfahrbares Zwischenmagazin mit mehreren Werkzeugaufnahmen aufweist, wird erfindungsgemäß dadurch gelöst, dass zur Aufnahme eines zu wechselnden Werkzeugs des Werkzeugträgers zumindest eine Werkzeugaufnahme des Zwischenmagazins freigehalten wird, dass zum Werkzeugwechsel zunächst das zu wechselnde Werkzeug von der freien Werkzeugaufnahme übernommen und dann durch eine Drehbewegung des Zwischenmagazins das gewünschte Werkzeug in eine Übergabeposition in Bezug auf den Werkzeugträger gebracht und anschließend durch Verfahren der Werkzeugaufnahme des Zwischenmagazins in die Werkzeugaufnahme des Werkzeugträgers bewegt wird.

Durch diese Verfahrensweise ergeben sich für das Zwischenmagazin relativ kurze Schwenkwinkel. Wenn das Zwischenmagazin beispielsweise sechs Werkzeugaufnahmen hat und man immer einen Leerplatz vorsieht, dann ergibt sich statistisch ein durchschnittlicher Schwenkwinkel für einen Werkzeugwechsel von 90°. Würde man bei einem Zwischenmagazin mit sechs Werkzeugaufnahmen nur jede zweite Werkzeugaufnahme mit einem Werkzeug bestücken, dann betrüge der durchschnittliche Schwenkwinkel nur 60°.

Besonders kurze Werkzeugwechselzeiten ergeben sich, wenn gemäß einer Weiterbildung der Erfindung zeitunabhängig vom Wechsel eines Werkzeugs zwischen dem Werkzeugträger und dem Zwischenmagazin ein Werkzeug des Zwischenmagazins mit einem Werkzeug der Längstransporteinheit gewechselt wird. Gleiches wird erreicht durch eine optimale Wechselstrategie zwischen Längstransporteinheit und Zwischenmagazin.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine Vorderansicht einer erfindungsgemäßen Drehmaschine,
- Fig.2: eine Seitenansicht der Drehmaschine,
- Fig.3: eine schematische Darstellung des Werkzeugwechselvorganges zwischen einer Längstransporteinheit und einem Zwischenmagazin,
- Fig.4: eine schematische Darstellung des Werkzeugwechselvorganges zwischen dem Zwischenmagazin und einem Werkzeugträger.

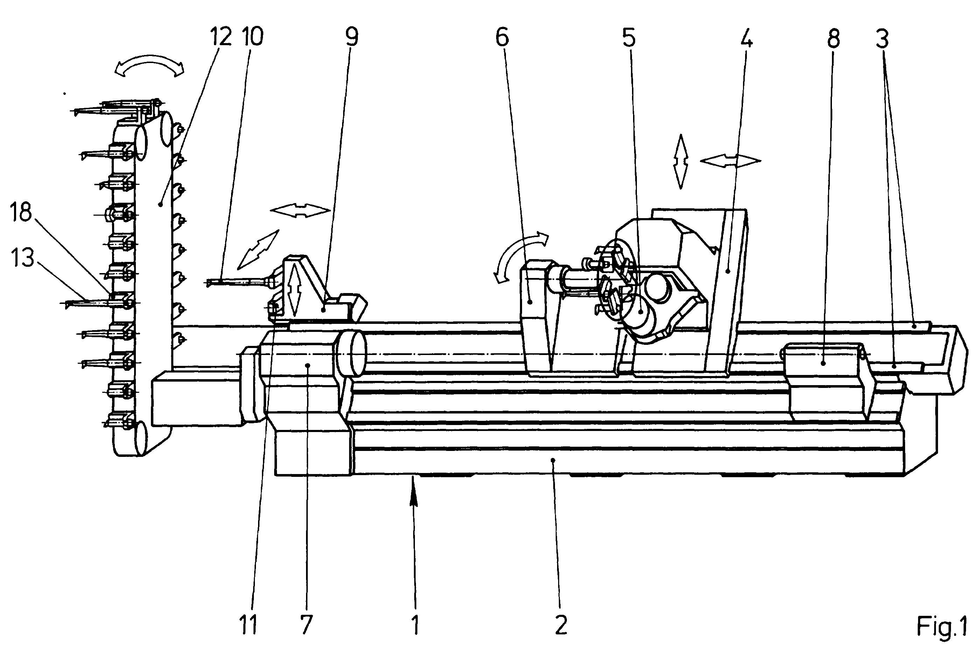

Die Figur 1 zeigt eine Drehmaschine 1 mit einem Maschinenbett 2, welches Führungsbahnen 3 aufweist, auf denen ein Bettschlitten 4 längsverfahrbar angeordnet ist. Der Bettschlitten 4 hat einen Werkzeugträger 5. Ebenfalls auf den Führungsbahnen 3 angeordnet ist ein Zwischenmagazin 6, welches fest mit dem Bettschlitten 4 verbunden ist und deshalb die Bewegungen des Bettschlittens 4 mit ausführt.

Die Drehmaschine 1 hat einen üblichen Spindelkasten 7 und auf der gegenüberliegenden Seite einen Reitstock 8. Oberhalb des Spindelkastens 7 erkennt man eine Längstransporteinheit 9, welche zwei Werkzeuge 10 trägt und eine freie Werkzeugaufnahme 11 hat. Fest mit der Drehmaschine 1 verbunden ist an ihrer linken Stirnseite ein ortsfestes Magazin 12, welches als Kettenmagazin ausgebildet ist und beispielsweise mit Werkzeugen 13 in Werkzeugspeicherplätzen 18 bestückt ist.

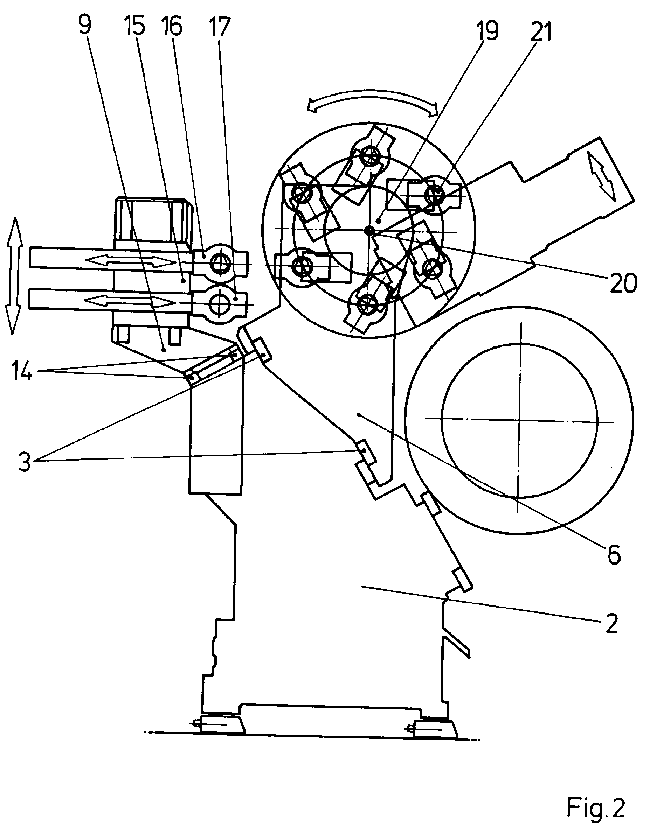

Die Figur 2 lässt erkennen, dass die Längstransporteinheit 9 auf an der Rückseite des Maschinenbettes 2 vorgesehenen Führungsbahnen 14 angeordnet ist. Diese Führungsbahnen 14 verlaufen parallel zu den Führungsbahnen 3 des Zwischenmagazins 6 und des in Figur 2 nicht zu sehenden Bettschlittens 4. Die Längstransporteinheit 9 hat einen vertikal verfahrbaren Schieber 15, der zwei quer zu dem Maschinenbett 2 verfahrbare Werkzeugaufnahmen 16, 17 trägt.

Rechts neben der Längstransporteinheit 9 erkennt man in Figur 2 von dem Zwischenmagazin 6 einen Werkzeughalter 19, welcher um eine Achse 20 schwenkbar ist und auf einem gemeinsamen Teilkreis mit gleicher Teilung sechs Werkzeugaufnahmen 21 hat.

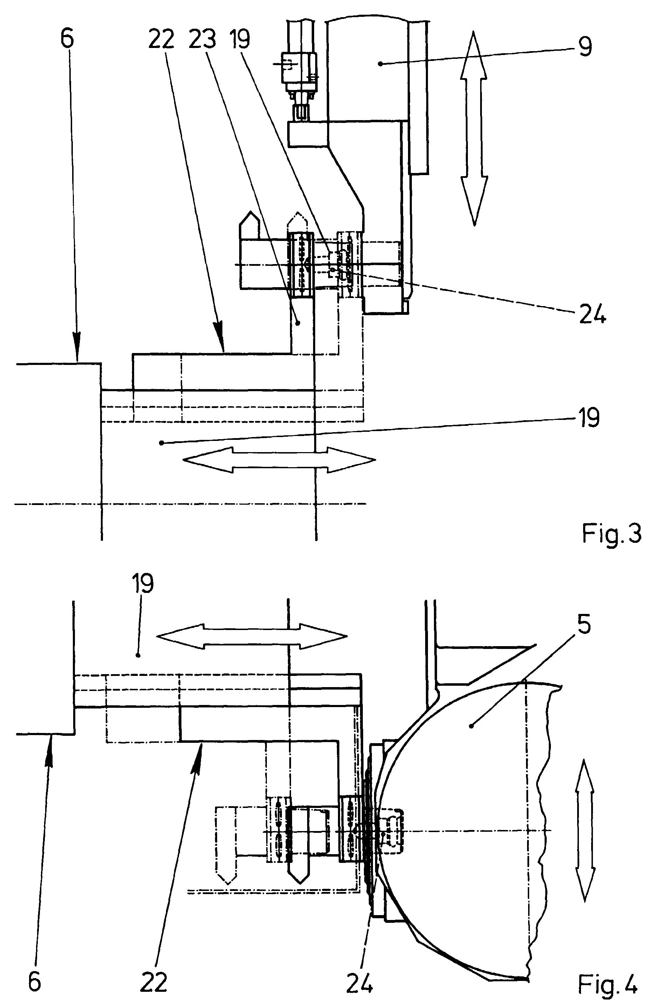

Die Figur 3 zeigt, dass bei dem Zwischenmagazin 6 auf dem Werkzeughalter 19 parallel zur Drehachse verfahrbare Schieber 22 mit jeweils einem radial nach außen weisenden Arm 23 angeordnet sind, der jeweils einen der Werkzeughalter 19 trägt. Dem Zwischenmagazin 6 gegenüber befindet sich in Figur 3 die Längstransporteinheit 9, so dass durch Verfahren des Schiebers 22 oder Längsverfahren der Längstransporteinheit 9 ein Werkzeug 24 gewechselt werden kann.

Die Figur 4 zeigt, wie vom Zwischenmagazin 6 ein Werkzeug 24 in den Werkzeugträger 5 gewechselt wird. Hierzu verfährt man den Schieber 22, so dass der Werkzeugträger 5 keine Bewegung in Längsrichtung ausführen muss. Im Einzelnen läuft der Werkzeugwechselvorgang zwischen dem Werkzeugträger 5 und dem Zwischenmagazin 6 wie folgt ab:

Zunächst wird das Zwischenmagazin 6 mit einem leeren Werkzeughalter 19 in die in Figur 4 gezeigte Wechselposition zum Werkzeugträger 5 geschwenkt. Dann verfährt man den Schieber 22 des Zwischenmagazins 6 und zieht nach Lösen der Klemmung des Werkzeugs 24 im Werkzeugträger 5 das Werkzeug 24 aus dem Werkzeugträger 5 heraus. Anschließend schwenkt man den Werkzeughalter 19 um so viel, dass ein gewünschtes Werkzeug des Zwischenmagazins 6 mit der gewünschten Werkzeugaufnahme 21 fluchtet und schiebt dieses Werkzeug mittels des Schiebers 22 vom Zwischenmagazin 6 in den Werkzeugträger 5. Während dieser Zeit, jedoch auch zeitlich dazu versetzt, können andere Werkzeuge mittels der Längstransporteinheit 9 in das Zwischenmagazin 6 gewechselt oder von dem ortsfesten Magazin 12 zum Zwischenmagazin 6 transportiert werden.

Entscheidend für die Erfindung sind die zeitliche Unabhängigkeit der Wechselvorgänge voneinander in Bezug auf die axiale Verschiebung der zu wechselnden Werkzeuge und die geringen Massen, die beim Wechselvorgang zu beschleunigen sind, was zu niedrigen Nebenzeiten führt.

### Bezugszeichenliste

- 1: Drehmaschine
- 2: Maschinenbett
- 3: Führungsbahnen
- 4: Bettschlitten
- 5: Werkzeugträger
- 6: Zwischenmagazin
- 7: Spindelkasten
- 8: Reitstock
- 9: Längstransporteinheit
- 10: Werkzeug
- 11: Werkzeugaufnahme
- 12: ortsfestes Magazin
- 13: Werkzeug
- 14: Führungsbahn
- 15: Schieber
- 16: Werkzeugaufnahme
- 17: Werkzeugaufnahme
- 18: Werkzeugspeicherplätze
- 19: Werkzeughalter
- 20: Achse
- 21: Werkzeugaufnahme
- 22: Schieber
- 23: Arm
- 24: Werkzeug

## Patentansprüche

1. Drehmaschine mit einem Maschinenbett, auf welchem ein Bettschlitten mit einem Werkzeugträger verfahrbar angeordnet ist und die ein ortsfest angeordnetes Werkzeugmagazin sowie ein parallel zu dem Maschinenbett verfahrbares Zwischenmagazin mit mehreren Werkzeugaufnahmen aufweist, **dadurch gekennzeichnet**, dass zum Transport von Werkzeugen (13) von dem ortsfesten Werkzeugmagazin (12) zum Zwischenmagazin (6) eine parallel zu dem Maschinenbett (2) verfahrbare Längstransporteinheit (9) angeordnet ist und dass die Werkzeugaufnahmen (21) des Zwischenmagazins (6) auf einem um eine in Längsrichtung des Maschinenbettes (2) verlaufende Achse (20) drehbar angeordneten Werkzeughalter (19) angeordnet und zum unmittelbaren Wechsel von Werkzeugen (13) zwischen dem Werkzeugträger (5) und dem Zwischenmagazin (6) sowie der Längstransporteinheit (9) und dem Zwischenmagazin (6)unabhängig voneinander in Längsrichtung des Maschinenbettes (2) verfahrbar sind.

2. Drehmaschine nach Anspruch 1, **dadurch gekennzeichnet,** dass jede Werkzeugaufnahme (21) des Zwischenmagazins (6) an einem radial ausgerichteten Arm (23) eines in Längsrichtung des Maschinenbettes (2) verfahrbaren Schiebers (22) des Zwischenmagazins (6) angeordnet ist.

3. Drehmaschine nach den Ansprüchen 1 oder 2, **dadurch gekennzeichnet**, dass das Zwischenmagazin (6) auf Führungsbahnen (3) verfahrbar ist, welche zugleich zum Verfahren des Bettschlittens (4) dienen und dass das Zwischenmagazin (6) unmittelbar mit dem Bettschlitten (4) verbunden ist.

4. Drehmaschine nach zumindest einem der vorangehenden Ansprüche, **dadurch gekennzeichnet**, dass die Längstransporteinheit (9) einen höhenverfahrbaren Schieber (15) und daran zwei unabhängig voneinander quer verfahrbare Werkzeugaufnahmen (16, 17) hat.

5. Drehmaschine nach zumindest einem der vorangehenden Ansprüche, **dadurch gekennzeichnet**, dass das ortsfeste Werkzeugmagazin (12) an der von der Bedienseite der Drehmaschine (1) aus gesehen linken Stirnseite des Maschinenbettes (2) angeordnet ist und in Längsrichtung des Maschinenbettes (2) ausgerichtete Werkzeugspeicherplätze (18) aufweist.

6. Verfahren zum Wechseln von Werkzeugen einer Drehmaschine, welche ein ortsfest angeordnetes Werkzeugmagazin sowie ein parallel zu dem Maschinenbett verfahrbares Zwischenmagazin mit mehreren Werkzeugaufnahmen aufweist, **dadurch gekennzeichnet**, dass zur Aufnahme eines zu wechselnden Werkzeugs des Werkzeugträgers zumindest eine Werkzeugaufnahme des Zwischenmagazins freigehalten wird, dass zum Werkzeugwechsel zunächst das zu wechselnde Werkzeug von der freien Werkzeugaufnahme übernommen und dann durch eine Drehbewegung des Zwischenmagazins das gewünschte Werkzeug in eine Übergabeposition in Bezug auf den Werkzeugträger gebracht und anschließend durch Verfahren der Werkzeugaufnahme des Zwischenmagazins in die Werkzeugaufnahme des Werkzeugträgers bewegt wird.

7. Verfahren nach Anspruch 6, **dadurch gekennzeichnet**, dass zeitunabhängig vom Wechsel eines Werkzeugs zwischen dem Werkzeugträgers und dem Zwischenmagazin ein Werkzeug des Zwischenmagazins mit einem Werkzeug der Längstransporteinheit gewechselt wird.
